# EUROPÄISCHE PATENTSCHRIFT

(11) **EP 0 688 355 B1**
(45) Veröffentlichungstag und Bekanntmachung des Hinweises auf die Patenterteilung: **04.06.1997**
(21) Anmeldenummer: 94909095.5
(22) Anmeldetag: 01.03.1994
(51) Int. Cl.: C11D 1/02, C11D 3/37, C11D 3/38, C11D 1/83, C11D 10/04

(54) **WISCHPFLEGEMITTEL**
FLOOR-CARE AGENTS
PRODUITS D'ENTRETIEN POUR SOLS

(30) Priorität: 10.03.1993 DE 4307473
(43) Veröffentlichungstag der Anmeldung: 27.12.1995
(73) Patentinhaber: Henkel-Ecolab GmbH & Co. OHG, 40554 Düsseldorf (DE)
(72) Erfinder: SKODELL, Birgit, D-40489 Düsseldorf (DE); OSBERGHAUS, Rainer, D-40593 Düsseldorf (DE); ROGMANN, Karl-Heinz, D-40880 Ratingen (DE)
(74) Vertreter: Wilk, Hans-Christof, Dr.
(86) Internationale Anmeldenummer: EP9400592
(87) Internationale Veröffentlichungsnummer: WO9420594

(56) Entgegenhaltungen:
- EP-A- 0 215 451
- WO-A-92/15662
- WO-A-93/23513
- FR-A- 2 294 231

## Beschreibung

Die vorliegende Erfindung liegt auf dem Gebiet der Reinigung von Fußböden mit Hilfe wäßriger Tensidlösungen.

Die heute gebräuchlichsten Verfahren zur Reinigung und Pflege von Fußböden lassen sich im wesentlichen in drei Klassen einteilen:

Verfahren, die in erster Linie die Pflege und Konservierung der Fußböden zum Ziel haben, verwenden Mittel, die nach dem Auftragen und Verteilen auf den Fußbodenoberflächen mehr oder weniger harte widerstandsfähige Schutzfilme erzeugen. Die Mittel enthalten zu diesem Zweck, meist in emulgierter Form, Wachse oder filmbildende Polymere und vernetzende Wirkstoffe, in der Regel Schwermetallsalze, die zusammen nach dem Abtrocknen auf den behandelten Flächen selbstglänzende oder polierbare Filme bilden. Auf diese Weise läßt sich eine langanhaltende Konservierung der Oberflächen erreichen, wobei je nach Qualität des Films auch starke mechanische Beanspruchungen gut vertragen werden. Nachteilig ist bei diesen Mitteln, daß eine Entfernung der festhaftenden Filme, wenn sie, etwa wegen Verschmutzung oder Beschädigung, notwendig wird, nur unter extremen Bedingungen möglich ist.

Im Gegensatz dazu verwendet man bei Verfahren, deren Ziel die Reinigung und Wiederherstellung der ursprünglichen Oberfläche ist, Mittel die hohe Anteile an Tensiden, oft zusammen mit alkalisch reagierenden Stoffen, organischen Lösungsmitteln oder Abrasivstoffen enthalten. Mit diesen Mitteln ist in vielen Fällen eine gründliche Entfernung von Verschmutzungen und alten Belägen möglich, doch sind die so gereinigten Oberflächen danach in der Regel der Wiederanschmutzung schutzlos ausgesetzt, sofern nicht eine Konservierungsbehandlung angeschlossen wird.

Neben diesem Verfahren der Grundreinigung, bei dem die alten Selbstglanzbeläge entfernt werden, kennt man Verfahren zur oberflächlichen Reinigung, bei denen nur lose aufliegender und anhaftender Schmutz entfernt wird, ohne daß es zu einem Angriff auf die Pflegefilme kommt. Die bei dieser Unterhaltsreinigung verwendeten Mittel kommen in der Regel nur in verdünnter Form zum Einsatz und enthalten in der Anwendungskonzentration nur geringe Mengen an Tensiden und allenfalls geringe Mengen an Alkali. Üblicherweise sind gleichzeitig geringe Konzentrationen an pflegenden Substanzen enthalten, weshalb diese Mittel auch als Wischpflegemittel bezeichnet werden. Die pflegenden Substanzen hinterlassen beim Abtrocknen auf dem Boden einen dünnen zusätzlichen Film, der einerseits Unebenheiten in der vorhandenen Oberfläche ausgleichen kann und der, weil er bei der nächsten derartigen Behandlung wieder aufgelöst wird, zur leichteren Schmutzentfernung beiträgt. Beispiele derartiger Mittel finden sich etwa in der deutschen Patentanmeldung 35 33 531 und der britischen Patentschrift 1 528 592.

Bei der Entwicklung von Wischpflegemitteln besteht stärker als bei anderen Reinigungsmitteln die Notwendigkeit, gleichzeitig mehrere Aufgaben optimal zu lösen. Einerseits sollen diese Mittel ein gutes Reinigungsvermögen aufweisen und in der Lage sein, die von früheren Anwendungen dieser Mittel herrührenden Pflegefilme wieder aufzulösen, andererseits aber die gegebenenfalls vorhandenen mehr oder weniger permanenten Pflegefilme nicht angreifen. Weiterhin sollen diese Mittel bei der Anwendung so gleichmäßig auftrocknen, daß die Oberfläche einheitlich aussieht und keine Rückstände in Form von Streifen oder Tropfen erkennbar sind. Je nach Wahl der pflegenden Substanzen können dabei die Mittel seidenmatte, selbstglänzende oder auch polierbare Filme hinterlassen. In jedem Falle wird gefordert, daß der verbleibende Pflegefilm nicht seinerseits die Wiederanschmutzung fördert. Trotz zahlreicher Vorschläge für die Zusammensetzung von Wischpflegemitteln ist man auch heute noch weit von einem Mittel entfernt, das alle genannten Forderungen optimal erfüllt. Es bestand daher nach wie vor die Aufgabe, ein insgesamt besser geeignetes Verfahren zur Reinigung und Pflege von Fußböden und dazu geeignete Mittel zu entwickeln.

Die vorliegende Erfindung bietet eine Lösung des Problems in Form eines Verfahrens zur Reinigung und Pflege von Fußböden, bei dem zunächst ein Reinigungsmittel, das synthetisches anionisches Tensid und eine pflegende Substanz aus der Gruppe Wachse, filmbildende Polymere, Seife und deren Gemische enthält, mit Wasser auf einen Gehalt an nichtflüchtigen Bestandteilen von 0,03 bis 1,0 g/l verdünnt wird und dann der Fußboden unter Zuhilfenahme eines saugfähigen Gegenstandes mit dieser verdünnten Lösung des Mittels gewischt wird, wobei wenigstens 20 Gew.-% der im Reinigungsmittel enthaltenen Tenside, einschließlich der Seifen, in Form von Lithiumsalzen vorliegen.

Ein weiterer Gegenstand der Erfindung sind Mittel gemäß Anspruch 9.

Ein weiterer Gegenstand der Erfindung sind Mittel zur Durchführung des Verfahrens, die neben synthetischem, anionischem Tensid als pflegende Substanz mindestens eine Substanz aus der Gruppe Wachs und filmbildendes Polymer mit einer minimalen Filmbildetemperatur zwischen 0 und 70 °C enthalten. Vorzugsweise enthalten die Mittel als pflegende Substanz ein Gemisch aus Wachs und filmbildendem Polymer.

Das neue Verfahren zeichnet sich sowohl durch gutes Reinigungsvermögen als auch durch ungewöhnlich gleichmäßige Pflegewirkung aus und die mit diesem Verfahren erzeugten Pflegefilme sind außerordentlich unempfindlich gegen Wiederanschmutzung. Dies gilt weitgehend unabhängig davon, welche pflegenden Substanzen in den eingesetzten Mitteln verwendet werden, so daß es möglich ist, unterschiedliche Oberflächeneffekte zu erzielen, ohne auf die sonstigen Vorteile der Mittel zu verzichten. Die Verwendung von Tensiden in Form der Lithiumsalze ist früher für die Reinigung von textilen Gegenständen, beispielsweise Teppichen und Polstermöbeln vorgeschlagen worden (DE 1 178 968 und DE 1 284 555), doch sind die dort zu lösenden Aufgaben von denen bei der Reinigung von harten Fußbodenoberflächen verschieden. Dementsprechend sind die dort genannten Mittel auch anders zusammengesetzt und enthalten insbesondere keine pflegenden Substanzen, wie sie bei der Wischpflege von Fußböden benötigt werden.

Bei den synthetischen anionischen Tensiden, die in dem erfindungsgemäßen Verfahren verwendet werden, handelt es sich vor allem um solche vom Typ der Sulfonate und Sulfate. Als Tenside vom Sulfonattyp kommen Alkylbenzolsulfonate mit einem C₉-C₁₅-Alkylrest, beispielsweise Dodecylbenzolsulfonat, und Olefinsulfonate, d. h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch die Alkansulfonate, die aus C₁₂-C₁₈-Alkanen durch Sulfochlorierung oder Sulfoxidation und anschließende Hydrolyse bzw. Neutralisation oder durch Bisulfitaddition an Olefine erhältlich sind, sowie die Ester von α-Sulfofettsäuren, z. B. die α-sulfonierten Methyl- oder Ethylester der hydrierten Kokos-, Palmkern- oder Talgfettsäuren.

Geeignete Tenside vom Sulfattyp sind die Schwefelsäuremonoester von langkettigen primären Alkoholen natürlichen oder synthetischen Ursprungs, d. h. von Fettalkoholen, wie z. B. Kokosfettalkoholen, Oleylalkohol, Lauryl-, Myristyl-, Palmityl- oder Stearylalkohol, oder den C₁₀-C₂₀-Oxoalkoholen oder sekundären Alkoholen dieser Kettenlänge. Auch die Schwefelsäuremonoester der mit 1 bis 6 Mol Ethylenoxid (E0) ethoxylierten aliphatischen langkettigen primären Alkohole bzw. ethoxylierten sekundären Alkohole sind geeignet. Ferner eignen sich sulfatierte Fettsäurealkanolamide, sulfatierte Fettsäuremonoglyceride, langkettige Sulfobernsteinsäureester sowie die Salze von langkettigen Ethercarbonsäuren, die beispielsweise durch Umsetzung langkettiger, mit 1 - 10 Mol E0 ethoxilierter Alkohole mit Chloressigsäure erhältlich sind. Die anionischen Tenside werden, soweit sie nicht als Lithiumsalze vorliegen, vorzugsweise als Alkalisalze, insbesondere Natriumsalze eingesetzt, doch können auch Ammoniumsalze oder die Salze von Alkanolaminen mit 2 bis 6 C-Atomen verwendet werden. Besonders bevorzugte synthetische Aniontenside sind im Rahmen der vorliegenden Erfindungen die Alkansulfonate, die 0lefinsulfonate, die Fettalkoholsulfate und die Fettalkoholethersulfate.

Zu den anionischen Tensiden zählen auch die Seifen, d. h. die Salze von Fettsäuren mit 10 bis 22, vorzugsweise 12 bis 18 C-Atomen. Neben ihren tensidischen Eigenschaften, die für die Reinigung benötigt werden, weisen die Seifen aber auch die Eigenschaft auf, nach dem Abtrocknen auf den Fußbodenoberflächen Pflegefilme zu bilden. Insbesondere dann, wenn seidenmatt glänzende Pflegefilme gewünscht werden, können deshalb Seifen auch als alleinige Pflegesubstanzen in den im erfindunsgemäßen Verfahren verwendeten Mitteln enthalten sein. Auch die Seifen werden, soweit sie nicht als Lithiumseifen eingesetzt werden, vorzugsweise als Natriumseifen in den Mitteln verwendet.

Neben den synthetischen anionischen Tensiden und gegebenenfalls Seifen können die im erfindungsgemäßen Verfahren verwendeten Mittel nichtionische Tenside enthalten. Als nichtionische Tenside eignen sich in erster Linie die Anlagerungsprodukte von 3 bis 20 Mol Ethylenoxid (E0) an primäre C₁₀-C₂₀-Alkohole, wie z. B. an Kokos- oder Talgfettalkohole, an Oleylalkohol, an Oxoalkohole oder an sekundäre Alkohole dieser Kettenlänge. Dabei können neben den hierbei umfaßten wasserlöslichen nichtionischen Tensiden auch die nicht vollständig wasserlöslichen niedrig ethoxylierten Fettalkohol-Polyglykolether mit 3 bis 7 Ethylenglykoletherresten im Molekül von Interesse sein, vor allem dann, wenn sie zusammen mit wasserlöslichen nichtionischen oder anionischen Tensiden eingesetzt werden. Ebenfalls geeignet sind die entsprechenden Ethoxylierungsprodukte anderer langkettiger Verbindungen, beispielsweise der Fettsäuren und der Fettsäureamide mit 12 bis 18 C-Atomen und der Alkylphenole mit 8 bis 16 C-Atomen im Alkylteil. In all diesen Produkten kann anstelle eines Teils des Ethylenoxids auch Propylenoxid (P0) angelagert sein. Weitere geeignete nichtionische Tenside sind auch die wasserlöslichen, 20 bis 250 Ethylenglykolethergruppen und 10 bis 100 Propylenglykolethergruppen enthaltenden Anlagerungsprodukte von Ethylenoxid an Polypropylenglykol, Alkylendiaminpolypropylenglykol und an Alkylpolypropylenglykol mit 1 bis 10 Kohlenstoffatomen in der Alkylkette, in denen die Polypropylenglykolkette als hydrophober Rest fungiert. Als nichtionische Tenside eignen sich ebenfalls Mono- und Diethanolamide der Fettsäuren sowie langkettige Aminoxide oder Sulfoxide, beispielsweise die Verbindungen N-Kokosalkyl-N,N-dimethylaminoxid, N-Talgalkyl-N,N-dihydroxyethylaminoxid, und auch die wasserlöslichen Alkylglycoside, deren hydrophober C₈-C₂₀-Alkylrest mit einem meist oligomeren hydrophilen Glycosidrest glykosidisch verknüpft ist, beispielsweise C₁₂-C₁₄-Fettalkohol + 1,6 Glucose. In den im erfindungsgemäßen Verfahren verwendeten Mitteln werden als nichtionische Tenside Alkylpolyglucoside bevorzugt.

Neben synthetischen anionischen und/oder nichtionischen Tensiden sowie Seifen können die im erfindungsgemäßen Verfahren verwendeten Mittel gegebenenfalls auch andere Tenside in geringerer Menge enthalten, wenn dies zur Erzielung besonderer Effekte erwünscht ist und die ansonsten günstigen Eigenschaften der Mittel dadurch nicht beeinträchtigt werden. Besonders zu erwähnen sind hier die amphoteren Tenside, die in ihrem Molekül sowohl ein kationisch geladenes Zentrum (üblicherweise eine tertiäre Amino- oder eine quartäre Ammoniumgruppe) und ein anionisch geladenes Zentrum (üblicherweise eine Carboxylat- oder eine Sulfonatgruppe) enthalten. Beispiele derartiger Tenside sind N-Kokosalkyl-N,N-dimethylaminoacetat und N-Dodecyl-N,N-dimethyl-3-aminopropansulfonat.

Der Gehalt an Tensiden liegt bei den im erfindungsgemäßen Verfahren verwendeten Mitteln vorzugsweise zwischen 1 und 35 Gew.-%, insbesondere zwischen 3 und 10 Gew.-%, bezogen auf das Gesamtgewicht des unverdünnten wäßrigen Mittels. Vorzugsweise sollen 20 bis 90 Gew.-%, insbesondere 30 bis 60 Gew.-% dieser Tenside in Form der Lithiumsalze vorliegen, um die erfindungsgemäßen Vorteile besonders deutlich zu erreichen.

Als pflegende Substanzen kommen außer den bereits erwähnten Seifen Wachse und filmbildende Polymere in Betracht. Diese Substanzen können in den im erfindungsgemäßen Verfahren verwendeten Mitteln einzeln als Pflegesubstanzen verwendet werden, doch sind auch Gemische möglich. Vorzugsweise werden Kombinationen von Wachsen und filmbildenden Polymeren wegen ihrer besonders ausgewogenen Pflegeeigenschaften eingesetzt.

Als Wachse eignen sich sowohl natürliche Wachse als auch synthetische Wachse, die natürlichen Ursprungs aber auch vollsynthetisch hergestellt sein können. Beispiele sind Polyethylenwachse, oxidierte Polyethylenwachse, Montanesterwachse, Paraffinwachse, Candellilawachs und Carnaubawachs. Von diesen werden in den erfindungsgemäßen Mitteln Montanesterwachs, Polyethylenwachs und Carnaubawachs bevorzugt. Besonders bevorzugt werden Wachsmischungen aus Montanesterwachs und Polyethylenwachs sowie Montanesterwachs und Carnaubawachs.

Die Wachse liegen in den Mitteln in emulgierter Form vor. Sofern nicht überwiegend selbstemulgierende Wachse verwendet werden, enthalten die erfindungsgemäßen Mittel deshalb übliche Wachsemulgatoren in Mengen bis zu 50 Gew.-%, vorzugsweise zwischen 10 und 20 Gew.-%, bezogen auf den Wachsgehalt. Beispiele derartiger Emulgatoren sind Oleylcetylalkohol + 20 E0 und Sorbitmonooleat.

Bei den filmbildenden Polymerverbindungen handelt es sich um solche, die in Wasser bei neutralem pH-Wert wenigstens teilweise unlöslich sind und die eine minimale Filmbildetemperatur im Bereich zwischen etwa 0 und etwa 70 °C aufweisen. Es handelt sich dabei vorzugsweise um Polymere, die aus ethylenisch ungesättigten Monomeren hergestellt werden. Beispiele derartiger Monomerer sind Styrol, Acrylsäureester oder Methacrylsäureester aliphatischer, 1 bis 8 C-Atome aufweisender Alkohole, Acrylnitril, Vinylacetat, Acrylsäure und Methacrylsäure. Besonders bevorzugt werden Poly(meth)acrylate aus zwei oder mehr dieser Monomeren, die gegebenenfalls in untergeordneter Menge auch weitere Monomere enthalten können. Ganz besonders bevorzugte Polymere enthalten 1 bis 30 Gew.-Teile an carbonsäuregruppenhaltigen Monomeren, 30 bis 70 Gew.-Teile Monomere, die Homopolymere mit Glastemperaturen unter 20 °C bilden, vorzugsweise Ester der Acrylsäure mit C₁-C₈-Alkoholen und/oder der Methacrylsäure mit C₄-C₈-Alkoholen und 30 bis 70 Gew.-Teile Monomere, die Homopolymere mit Glastemperaturen über Raumtemperatur bilden, vorzugsweise Methacrylsäureester von C₁-C₃-Alkoholen oder Styrol. Werden mehrere unterschiedliche Polymerverbindungen der vorstehend genannten Art im Gemisch eingesetzt, soll die Filmbildetemperatur, die für das Gemisch ermittelt wird, im Bereich zwischen 0 und 70 °C liegen. Die genannten Filmbildungstemperaturen beziehen sich auf das weichmacherfreie System, d. h. auf die Polymeren ohne weitere Zusätze.

Beispiele derartiger filmbildender Polymerer sind folgende, als Dispersionen angebotene Handelprodukte: Syntran 1501 (Firma Interpolymer), Primal 644 (Firma Rohm und Haas), Neocryl A 1049 (Firma ICI).

Die pflegenden Substanzen machen in den erfindungsgemäßen Mitteln vorzugsweise 5 bis 50 Gew.-% und insbesondere 20 bis 40 Gew.-% der insgesamt in den Mitteln enthaltenen nichtflüchtigen Bestandteile (Festkörper) aus. Als ganz besonders vorteilhaft hat sich eine Kombination aus Wachs, Polymer und Tensid im Gewichtsverhältnis von etwa 0,5 : 0,5 : 2 herausgestellt.

Neben den vorstehend beschriebenen obligatorischen Inhaltsstoffen und Wasser können die im erfindunsgemäßen Verfahren verwendeten Mittel weitere Hilfs- und Zusatzstoffe enthalten, wie sie in derartigen Mitteln üblich sind. Voraussetzung ist selbstverständlich, daß dadurch die positiven Wirkungen des Verfahrens nicht beeinträchtigt werden. Als Beispiele derartiger Zusatzstoffe seien Parfümöle, Farbstoffe, Viskositätsregulatoren, Konservierungsmittel Amine, Lösungsmittel, Lösungsvermittler, Salze und Netzharze genannt. Diese Stoffe werden üblicherweise in Mengen nicht über 10 Gew.-%, vorzugsweise zwischen 0,01 und 5 Gew.-% verwendet.

Die Herstellung der verwendeten Mittel kann im einfachsten Falle durch Zusammenmischen aller Komponenten in beliebiger Reihenfolge geschehen. Häufig ist es allerdings zweckmäßiger, von vorgefertigten Wachs- bzw. Polymerdispersionen in Wasser auszugehen und diese mit Wasser und den übrigen Bestandteilen der Mittel zu vermischen.

Im erfindungsgemäßen Verfahren werden die Reinigungsmittel grundsätzlich nach Verdünnung mit Wasser angewandt, wobei der Verdünnungsgrad von der Konzentration der Mittel abhängig ist. In der auf Anwendungskonzentration eingestellten verdünnten Lösung des Mittels soll der Gehalt an nichtflüchtigen Bestandteilen zwischen etwa 0,03 und etwa 1,0 Gew.-% liegen. Dies kann je nach Konzentration der unverdünnten Mittel durch Verdünnung mit Wasser im Verhältnis von etwa 1 : 10 bis 1 : 1 000, vorzugsweise 1 : 50 bis 1 : 200 erreicht werden. Die Behandlung der Oberfläche mit der auf Anwendungskonzentration eingestellten Lösungen erfolgt dann in der Weise, daß ein saugfähiger Gegenstand, beispielsweise ein Lappen oder ein Schwamm, mit der Lösung getränkt wird und die zu behandelnde Oberfläche mit diesen Gegenstand gleichmäßig gewischt wird. Bei diesem Vorgang werden Schmutz und evtl. vorhandene Filmreste aus früheren Behandlungen von der Oberfläche abgelöst und von dem Lappen bzw. Schwamm aufgenommen, um dann beim Ausspülen des Lappens oder Schwamms mit der verdünnten Reinigungsmittel lösung an dieses Medium abgegeben zu werden. Der auf der Oberfläche verbleibende Flüssigkeitsfilm trocknet gleichmäßig an und hinterläßt einen dünnen pflegenden Film, der bei einer späteren gleichartigen Behandlung wenigstens zum Teil wieder abgelöst wird.

### Beispiele

Durch Mischen der Einzelbestandteile in Wasser wurden das in Tabelle 1 angegebene erfindungsgemäße Mittel Nr. 1 sowie die nicht erfindungsgemäßen Mittel Nr. 2 und 3 hergestellt. Die Zahlenangaben bei den Inhaltsstoffen bedeuten Gewichtsprozent; der Rest zu 100 Gew.-% ist Wasser. 10 ml dieser Mittel wurden jeweils zu 1 l verdünnt und in dieser Form zur Prüfung der verschiedenen Eigenschaften eingesetzt. Die Prüfergebnisse sind ebenfalls in Tabelle 1 aufgeführt.

Im einzelnen wurde bei den Prüfungen folgendermaßen verfahren:
1. Prüfung des Reinigungsvermögens
   Die Reinigungswirkung der Wischpflegemittel wurde mit Hilfe eines Gardner-Waschbarkeits- und Scheuerprüfgeräts ermittelt, wie es in den Qualitätsnormen des Industrieverbandes Putz- und Pflegemittel e. V. beschrieben ist (Seifen-Öle-Fette-Wachse, 108, Seiten 526 bis 528 (1982)). Bei dieser Methode wird eine weiBe PVC-Folie mit einer Testanschmutzung aus Ruß und Fett versehen und unter standardisierten Bedingungen mit einem mit dem Reinigungsmittel getränktem Schwamm maschinell gewischt. Die Reinigungsleistung wird durch fotoelektrische Bestimmung des Remissionsgrades (Angaben in Prozent) gemessen.
2. Prüfung des Reinigungsvermögens nach Vorbehandlung
   Die Durchführung dieser Prüfung erfolgte in der gleichen Weise wie unter 1 angegeben, doch wurde vor dem Auftragen des Testschmutzes die weiße PVC-Folie 10mal mit der zu prüfenden Reinigungslösung gewischt und trocknen gelassen. Die Trockenzeit zwischen den einzelnen Wischzyklen betrug 30 bis 45 Minuten. Erst auf die so vorbereiteten Teststreifen wurde am nächsten Tag der Testschmutz aufgetragen und dann die Reinigungsprüfung durchgeführt.
3. Prüfung des Netzverhaltens
   Bei dieser Prüfung wurde ermittelt, inwieweit der Aufbau eines Pflegefilms bei der nachfolgenden Reinigungsbehandlung die Benetzung beeinträchtigt. Hierzu wurde ein größerer PVC-Bodenbelag während 10 Tagen 2mal täglich mit der zu prüfenden verdünnten Reinigungslösung gewischt. Bei der letzten Behandlung wurde das Netzverhalten während des Wischens und der anschlieBenden Trockenphase visuell begutachtet und nach folgender Skala bewertet:
   0 = Produkt benetzt die gesamte Fläche und reißt auch während der Trockenphase nicht auf
   1 = Produkt benetzt die gesamte Fläche und reißt während der Trockenphase auf
   2 = Produkt reißt während des Wischvorganges auf und bildet in der Trockenphase Inseln
   3 = auf der gesamten Oberfläche ist eine starke Inselbildung zu beobachten, die nach der Trocknung einen deutlich fleckigen Gesamteindruck hinterläßt.
4. Prüfung der Wiederanschmutzung
   Zur Beurteilung der Schmutzannahme und des Wiederanschmutzungsverhaltens wurde ein Fußbodenbelag von ca. 60 cm Breite und ca. 2 m Länge, der größere weiße Flächen in Form eines Musters enthielt, zunächst 10mal mit der zu prüfenden verdünnten Reinigungslösung gewischt und zwischengetrocknet. Der so vorbehandelte Belag wurde dann an einer gleichmäßig begangenen Stelle ausgelegt, und dort 1mal täglich mit der verdünnten Prüflösung gewischt. Nach 10 Tagen wurde der Versuch beendet und die Fläche vor und nach dem letzten Wischen visuell begutachtet und nach folgender Skala bewertet:
   0 = kein anhaftender Schmutz
   1 = leichte Verschmutzung
   2 = mittlere gleichmäßige Verschmutzung
   3 = starke Verschmutzung
   4 = sehr starke ungleichmäßige Verschmutzung.

Aus den in Tabelle 1 aufgeführten Prüfergebnissen wird deutlich, daß das erfindungsgemäße Mittel bei allen geprüften Eigenschaften Vorteile gegenüber den Mitteln des Standes der Technik aufweist.

**Tabelle 1**

| Beispiele | | | |
|---|---|---|---|
| Inhaltsstoffe | 1 | 2 | 3 |
| Carnaubawachs | 1 | 1 | 1 |
| C_{12/16}-Alkylpolyglucosid (1,4 Glucose) | 1 | 1 | 1 |
| Polyethylendispersion (Licomer WHS, Firma Hoechst) | 1,5 | 1,5 | 1,5 |
| Ethylenglykolmonophenylether | 1,5 | 1,5 | 1,5 |
| Parfüm | 0,5 | 0,5 | 0,5 |
| C_{8/12}-Fettalkoholsulfat-Li | 5 | - | - |
| C_{12/14}-Fettalkoholsulfat-Na | - | 5 | - |
| C_{10/14}-Fettalkohol+1,2P0+6,4E0 | - | - | 5 |
| Reinigungsvermögen(1) | 43,5 | 41,3 | 40,2 |
| Reinigungsvermögen nach Vorbehandlung(2) | 56,8 | 51,4 | 48,5 |
| Netzvermögen(3) | 0 | 1 | 2 |
| Wiederanschmutzung(4) | 1 | 2 | 3 |

## Patentansprüche

1. Verfahren zur Reinigung und Pflege von Fußböden, bei dem zunächst ein Reinigungsmittel, das synthetisches anionisches Tensid und eine pflegende Substanz aus der Grupe Wachse, filmbildende Polymere, Seife und deren Gemische enthält, mit Wasser auf einen Gehalt an nichtflüchtigen Bestandteilen von 0,03 bis 1,0 g/l verdünnt wird und dann der Fußboden unter Zuhilfenahme eines saugfähigen Gegenstandes mit dieser verdünnten Lösung des Mittels gewischt wird, dadurch gekennzeichnet, daß wenigstens 20 Gew.-% der im Reinigungsmittel enthaltenen Tenside, einschließlich der Seifen, in Form von Lithiumsalzen vorliegen.

2. Verfahren nach Anspruch 1, bei dem der Anteil der Tenside in Form der Lithiumsalze 20 bis 90 Gew.-%, vorzugsweise 30 bis 60 Gew.-% der insgesamt enthaltenen Tenside ausmacht.

3. Verfahren nach einem der Ansprüche 1 oder 2, bei dem als Tensid in Lithiumsalzform das Lithiumsalz eines langkettigen Monoalkylsulfats mit 8 bis 18 C-Atomen im Alkylteil verwendet wird.

4. Verfahren nach einem der Ansprüche 1 bis 3, bei dem der Gesamtgehalt an Tensiden im Reinigungsmittel 1 bis 35 Gew.-%, vorzugsweise 3 bis 10 Gew.-% beträgt.

5. Verfahren nach einem der Ansprüche 1 bis 4, in dem neben anionischen Tensiden auch nichtionische Tenside, vorzugsweise Alkylpolyglykoside enthalten sind.

6. Verfahren nach einem der Ansprüche 1 bis 5, bei dem die anionischen Tenside aus der Gruppe Alkylsulfate, Alkansulfonate, Olefinsulfonate, Ethersulfate, Seifen und deren Mischungen ausgewählt sind.

7. Verfahren nach einem der Ansprüche 1 bis 4, bei dem der Anteil an pflegenden Substanzen an den insgesamt enthaltenen nichtflüchtigen Bestandteilen im Reinigungsmittel 5 bis 50 Gew.-%, vorzugsweise 20 bis 40 Gew.-% beträgt.

8. Verfahren nach einem der Ansprüche 1 bis 7, in dem die pflegende Substanz aus Wachs besteht.

9. Mittel zur Durchführung eines der in den Ansprüchen 1 bis 8 beschriebenen Verfahrens, enthaltend synthetisches anionisches Tensid und, als pflegende Substanz, Wachs sowie gegebenenfalls Seife, dadurch gekennzeichnet, daß wenigstens 20 Gew.-% der in diesen Mitteln enthaltenen Tenside, einschließlich der Seifen, in Form von Lithiumsalzen vorliegen.

10. Mittel zur Durchführung eines der in den Ansprüchen 1 bis 8 beschriebenen Verfahrens, enthaltend synthetisches anionisches Tensid und, als pflegende Substanz, ein filmbildendes Polymer mit einer minimalen Filmbildetemperatur zwischen 0 und 70 °C sowie gegebenenfalls Seife, dadurch gekennzeichnet, daß wenigstens 20 Gew.-% der in diesen Mitteln enthaltenen Tenside, einschließlich der Seifen, in Form von Lithiumsalzen vorliegen.

11. Mittel nach einem der Ansprüche 9 oder 10, in dem als pflegende Substanz ein Gemisch aus Wachs und filmbildendem Polymer enthalten ist.

## Claims

1. A process for the cleaning and care of floors, in which a cleaning composition containing synthetic anionic surfactant and a floor-care substance from the group consisting of waxes, film-forming polymers, soap and mixtures thereof is first diluted with water to a content of non-volatile constituents of 0.03 to 1.0 g/l, after which the floor is wiped with this dilute solution of the composition with the aid of an absorbent article, characterized in that at least 20% by weight of the surfactants present in the cleaning composition, including the soaps, are present in the form of lithium salts.

2. A process as claimed in claim 1, in which the surfactants in the form of the lithium salts make up 20 to 90% by weight and preferably 30 to 60% by weight of total surfactants present in the cleaning composition.

3. A process as claimed in claim 1 or 2, in which the lithium salt of a long-chain monoalkyl sulfate containing 8 to 18 carbon atoms in the alkyl moiety is used as the surfactant in the lithium salt form.

4. A process as claimed in any of claims 1 to 3, in which the total surfactant content of the cleaning composition is 1 to 35% by weight and preferably 3 to 10% by weight.

5. A process as claimed in any of claims 1 to 4, in which, in addition to anionic surfactants, nonionic surfactants, preferably alkyl polyglycosides, are present in the cleaning composition.

6. A process as claimed in any of claims 1 to 5, in which the anionic surfactants are selected from the group consisting of alkyl sulfates, alkane sulfonates, olefin sulfonates, ether sulfates, soaps and mixtures thereof.

7. A process as claimed in any of claims 1 to 4, in which the floor-care substances make up 5 to 50% by weight and preferably 20 to 40% by weight of the total non-volatile constituents present in the cleaning composition.

8. A process as claimed in any of claims 1 to 7, in which the floor-care substance consists of wax.

9. A composition for carrying out the process claimed in claims 1 to 8 containing synthetic anionic surfactant and wax and optionally soap as the floor-care substance(s), characterized in that at least 20% by weight of the surfactants present in the composition, including the soaps, are present in the form of lithium salts.

10. A composition for carrying out the process claimed in claims 1 to 8 containing synthetic anionic surfactant and a film-forming polymer with a minimum film-forming temperature of 0 to 70°C and optionally soap as the floor-care substance(s), characterized in that at least 20% by weight of the surfactants present in the composition, including the soaps, are present in the form of lithium salts.

11. A composition as claimed in claim 9 or 10, in which a mixture of wax and film-forming polymer is present as the floor-care substance.

## Revendications

1. Procédé pour le nettoyage et l'entretien de sols, dans lequel, en premier lieu, un agent de nettoyage qui contient un agent tensioactif anionique synthétique et une substance d'entretien choisie parmi le groupe comprenant des cires, des polymères filmogènes, du savon et leurs mélanges, est dilué avec de l'eau pour obtenir une teneur en constituants non volatils de 0,03 à 1,0 g/l et ensuite, le sol est essuyé à l'aide d'un objet absorbant avec cette solution diluée de l'agent, caractérisé en ce qu'au moins 20 pour cent en poids des agents tensioactifs contenus dans le produit de nettoyage, en ce compris les savons, sont présents sous la forme de sels de lithium.

2. Procédé selon la revendication 1, dans lequel la fraction des agents tensioactifs sous la forme des sels de lithium représente 20 à 90 pour cent en poids, de préférence 30 à 60 pour cent en poids de la teneur totale en agents tensioactifs.

3. Procédé selon l'une quelconque des revendications 1 ou 2, dans lequel le sel de lithium d'un monoalkylsulfate à longue chaîne contenant 8 à 18 atomes de carbone dans la fraction alkyle tient lieu de tensioactif sous forme de sel de lithium.

4. Procédé selon l'une quelconque des revendications 1 à 3, où la teneur totale en tensioactifs dans le produit de nettoyage s'élève à 1 à 35 pour cent en poids, de préférence 3 à 10 pour cent en poids.

5. Procédé selon l'une quelconque des revendications 1 à 4, dans lequel sont contenus, outre des tensioactifs anioniques, également des tensioactifs non ioniques, de préférence des alkylpolyglycosides.

6. Procédé selon l'une quelconque des revendications 1 à 5, où les tensioactifs anioniques sont sélectionnés parmi le groupe des alkylsulfates, des alcane-sulfonates, des sulfonates d'oléfines, des éthersulfates, des savons et de leurs mélanges.

7. Procédé selon l'une quelconque des revendications 1 à 4, où la fraction des substances d'entretien de la teneur totale en constituants non volatils s'élève de 5 à 50 pour cent en poids, de préférence de 20 à 40 pour cent en poids.

8. Procédé selon l'une quelconque des revendications 1 à 7, dans lequel la substance d'entretien est constituée de cire.

9. Agents pour la mise en oeuvre d'un des procédés décrits dans les revendications 1 à 8, contenant un agent tensioactif anionicue synthétique et, comme substance d'entretien, de la cire ainsi que du savon le cas échéant, caractérisés par le fait qu'au moins 20 pour cent en poids des tensioactifs contenus dans ces agents, en ce compris les savons, se présentent sous la forme de sels de lithium.

10. Agents pour la mise en oeuvre d'un des procédés décrits dans les revendications 1 à 8, contenant un agent tensioactif anionique synthétique et, comme substance d'entretien, un polymère filmogène possédant une température filmogène minimale entre 0 et 70°C, ainsi que du savon le cas échéant, caractérisés en ce qu'au moins 20 pour cent en poids des tensioactifs contenus dans ces agents, en ce compris les savons, se présentent sous la forme de sels de lithium.

11. Agents selon l'une quelconque des revendications 9 ou 10, dans lesquels un mélange de cire et de polymère filmogène est contenu à titre de substance d'entretien.
